# EUROPEAN PATENT APPLICATION

(11) **EP 1 066 753 A2**
(43) Date of publication of application: **10.01.2001**
(21) Application number: 00114051.6
(22) Date of filing: 06.07.2000
(51) Int. Cl.: A01K 1/01

(54) **Multipurpose cat litter container**

(30) Priority: 08.07.1999 IT PI990042
(71) Applicant: Vettori, Rita, 56040 Pomaia - S. Luce (Prov. of Pisa) (IT); Garbui, Franco, 56040 Pomaia - S. Luce (Prov. of Pisa) (IT)
(72) Inventor: Vettori, Rita, 56040 Pomaia - S. Luce (Prov. of Pisa) (IT); Garbui, Franco, 56040 Pomaia - S. Luce (Prov. of Pisa) (IT)
(74) Representative: Modiano, Guido, Dr.-Ing.

(57) **Abstract**

A multipurpose litter container (1) for the urination and defecation of animals, particularly cats and the like, comprising a base element (2) in which at least two compartments (10a, 10b) are formed; and
a litter containment element (3), which is adapted to be placed above the base element (2);
the litter containment element (3) being detachably associable with the base element (2), so as to allow access to at least one portion of at least one of the compartments (10a, 10b) which is adapted to contain means (15) for containing the used litter that is removed from the litter containment element (3).

## Description

The present invention relates to a multipurpose litter container for cat defecation and urination.

In particular, the invention relates to the field of the manufacture of containers inside which sand or other material, commonly known as litter, is placed, and where the cat goes to relieve itself without soiling the surrounding environment. These containers are normally used in domestic environments or in breeding centers.

It is known that keeping a cat in a house or in another closed environment entails onerous problems linked in particular to domestic hygiene and to the need to provide the animal with a space suitable for relieving itself.

In order to overcome these problems, various devices are currently known which assume a sort of box-like shape inside which the litter is placed or even cage-like shapes, so that the animal can enter them to relieve itself and then exit.

However, these devices have several drawbacks. First of all, although the cage can be useful while transporting the animal, it is not an optimum solution for the cat, which does not like closed spaces and therefore uses it very reluctantly. Secondly, all toilet devices, including open ones and box-shaped ones, require constant maintenance and frequent replacement of the litter in order to keep the environment clean, otherwise the cat will no longer use it.

Changing the litter entails an unpleasant and complicated operation, since it is necessary to eliminate the used litter from the litter containment device, often by resorting to the assistance of a second person or in any case proceeding with difficulty, tipping its content into bags, with inevitable spillage of part of the waste material onto the floor.

It is then necessary to provide fresh litter and fill the device for new use by the animal.

All this while both the used litter container and the fresh litter are in a different environment with respect to the one where the device is located, with all the consequent difficulties, which increase most of all during journeys, vacations or other circumstances in which it would be particularly convenient to have all the necessary items within reach.

The aim of the present invention is to provide a multipurpose litter container for cat defecation and urination which allows to include in it all the items required for litter cleaning and replacement.

Within the scope of this aim, an object of the present invention is to provide a multipurpose litter container for cat urination and defecation which allows to keep the litter always clean without resorting to the use of external bags to remove the excrement and without having to draw from external bags to replenish the used litter.

Another object of the present invention is to provide a multipurpose litter container which can be transported easily and is therefore lightweight and also simple to use.

Another object of the present invention is to provide a multipurpose litter container which avoids the spread of bad odors in the rooms where it is used.

Another object of the present invention is to provide a multipurpose litter container which can be used for cats of different ages without any modification of its structure.

Another object of the present invention is to provide a multipurpose litter container which can be assembled easily.

Another object of the present invention is to provide a multipurpose litter container which is highly reliable and relatively simple to manufacture and at competitive costs.

This aim, these objects and others which will become better apparent hereinafter are achieved by a multipurpose litter container for the urination and defecation of animals, particularly cats and the like, characterized in that it comprises a base element in which at least two compartments are formed; and
a litter containment element, which is adapted to be placed above said base element;
said litter containment element being detachably associable with said base element, so as to allow access to at least one portion of at least one of said compartments which is adapted to contain means for containing the used litter that is removed from said litter containment element.

Further characteristics and advantages of the present invention will become better apparent from the following detailed description of preferred but not exclusive embodiments of a litter container according to the invention, illustrated only by way of non-limitative example in the accompanying drawings, wherein:
Figure 1 is a perspective view of the litter container according to the invention, in the assembled configuration;
Figure 2 is a perspective view of the litter container according to the invention, in the open configuration;
Figure 3 is a perspective view of one of the elements that compose the litter container according to the present invention;
Figure 4 is a perspective view of a second one of the elements that compose the litter container according to the present invention; and
Figure 5 is a perspective view of a third one of the elements that compose the litter container according to the present invention.

With reference to the above figures, the litter container according to the present invention, generally designated by the reference numeral 1, comprises a hollow box-like base element 2, on which an upper element or tray 3 is suitable to be placed; in turn, said upper element or tray has a hollow space 4 in which the litter is accommodated. The tray 3 is provided with a border 5 which folds toward the inside of the hollow space 4 and prevents the litter from escaping even when the animal moves about or digs small holes to relieve itself.

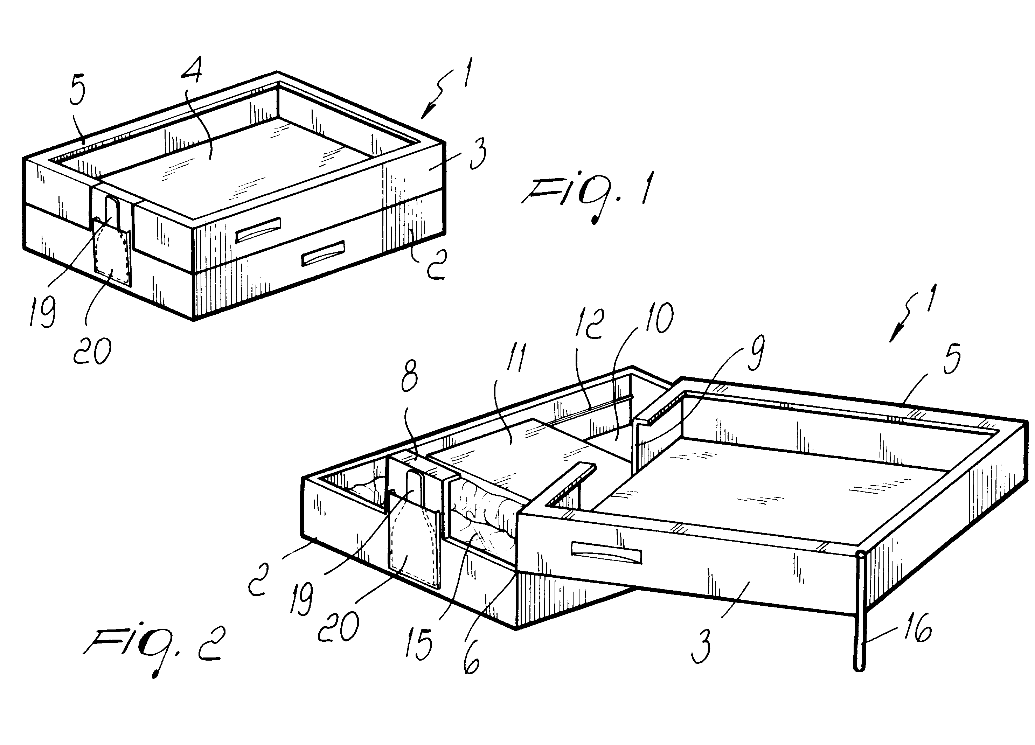

Conveniently, the base element 2 has a protruding element 7, whose lateral profiles, during closure, mate with the lateral profiles of an opening 9 formed at one of the sides of the tray 3; a protruding border 8 of said protruding element 7 mates with the border 5 of said tray, so that when the tray 3 is placed on the base element 2, as shown in Figure 1, the border 5 of the tray 3 is aligned with the border 8 of the protruding element 7.

The opening 9 of the tray 3 allows to remove the litter to be discarded without having to tilt or overturn said tray.

Conveniently, the tray 3 can be coupled to the base element 2 and is movable with respect to it, so as to expose an internal portion of the base element 2, as described in detail hereinafter.

Conveniently, the tray 3 is pivoted at one of its corners to the base element 2 by means of a pivot 14 which is rigidly coupled to a corner of the base element 2 and engages a complementarily shaped hole formed at a corresponding corner of the tray 3.

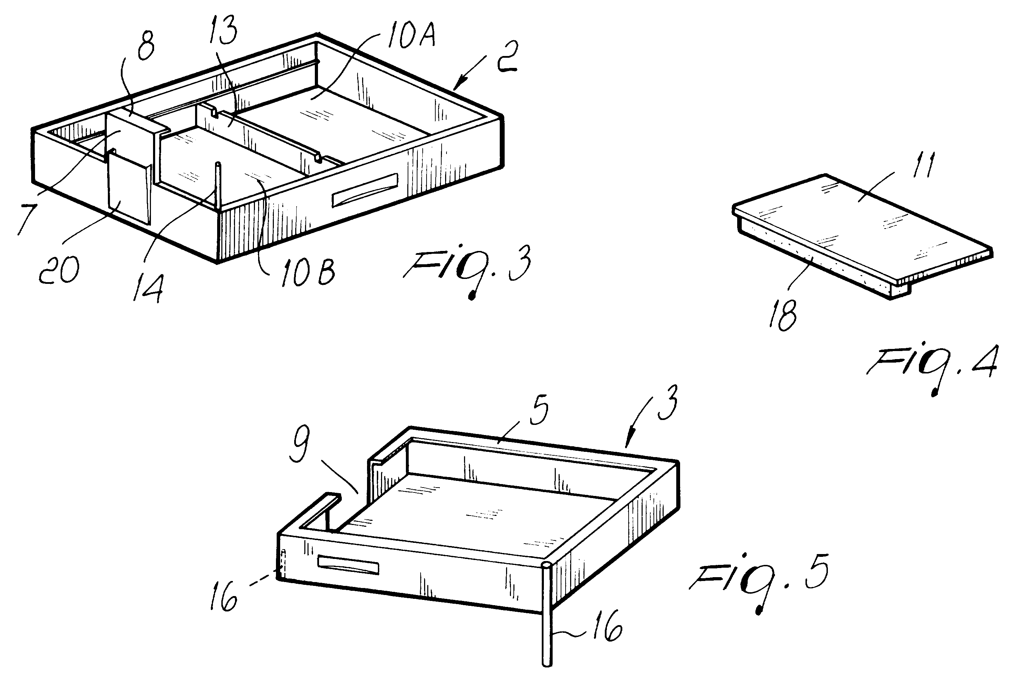

Conveniently, the tray 3 rotates about the pivot 14 with respect to the base element 2 so as to disengage the opening 9 from the protruding element 7, so that the used litter can be pushed out of the space 4 so that it falls into a compartment formed appropriately in the cavity of the base element 2. In particular, the base element 2, as shown in detail in Figure 3, is internally provided with at least one partition 13 which is adapted to form a first compartment 10a and a second compartment 10b. The first compartment 10a is meant to contain clean litter to allow replenishment of the litter that is present in the space 4 of the tray 3.

The compartment 10b is instead adapted to contain at least one bag for containing used litter, which is pushed out from the opening 9 to fall into the bag, designated by the reference numeral 15, which is conveniently engaged below the protruding element 7.

Advantageously, the tray 3 has, at one of its corners which during the rotation of the element 3 with respect to the base element 2 is meant to be rotated outward with respect to the base element 2, a supporting foot 16 for supporting the weight of the tray 3 when it is rotated outward with respect to the base element 2.

Conveniently, at least one compartment, and preferably the compartment 10b meant to contain the used litter, is covered by a covering element 11 which abuts against the walls of the compartment 10b and against the partition 13.

Conveniently, the covering element 11 can be provided with a container 18 which is adapted to release a deodorizing substance whose task is, during the opening of the covering element 11, for example owing to a translatory motion thereof, to release the deodorizing substance so that the compartment 10b that contains the used litter does not release further odor into the environment.

Moreover, the protruding element 7 can be provided with means for accommodating at least one scoop 19, with the seating means, designated by the reference numeral 20, which allow to arrange the scoop for example vertically. The scoop is used by the operator to remove the used litter and optionally replenish it with new litter which is present in the compartment 10a.

The beginning of the covering 11 thus slides from the position for closing the compartment 10b to an open position thereof, along rails 12 formed in the respective internal side walls of the base element 2.

Advantageously, the tray 3 can be separated completely from the base element 2 by lifting it, so as to allow full access to the inside of the base element and particularly to the compartments 10a and 10b.

With reference to the above figures, operation of the litter container 1 according to the invention is as follows.

Initially, the user replenishes the container 1 with the items necessary for using it, by inserting in the compartment 10a of the base element 2 the replacement clean litter and in the compartment 10b the bag 15 for containing the waste litter. At this point, the compartment 10b is closed with the covering element 11 and the tray 3 is arranged above the base element 2, inserting the pivot 14 in the corresponding hole 16.

The tray 3 is then filled with more litter in order to form the area where the animal will relieve itself, then the animal is allowed to enter it and lie on it in full freedom, since the box is open in its upper region.

The border 5 prevents spillage of the litter during use of the tray 3, even if the cat digs in the litter.

When it is necessary to clean the container, it is sufficient to move the tray 3 with respect to the base element 2, so as to free at least one portion of the compartment 10b, and thus allow the used litter that is present in the tray 3 to fall directly into the bag 15, which is indeed accommodated in the compartment 10b.

In particular, if the tray 3 rotates with respect to the base element 2, it is rotated about the plane 14, so as to allow access to the internal space of the base element 2.

During this operation, the opening 9 disengages from the protruding element 7 and forms an opening in the vertical wall of the tray 3, through which all the waste litter is made to fall into the bag 15 of the compartment 10b by using the appropriately provided scoop 19 accommodated in the seat 20.

Obviously, before discharging the used litter into the bag 15 it is necessary to open the covering element 11 and make it slide along the guides 12.

Once all the waste litter has been poured into the bag 15, the compartment 10b is closed by moving the covering element 11 horizontally again.

Then, again by using the scoop, the tray 3 is optionally filled with clean litter contained in the compartment 10a; also this operation is performed while the tray 3 is removed at least partially from the base element 2.

Once the operation has been completed, the tray 3 is returned into axial alignment with the base element 2 and the container 1 is thus reconstituted, making it ready for a new use.

For more in-depth cleaning operations or for convenience, the tray 3 can also be separated completely from the base element 2, in this case by performing a lifting action.

In practice it has been observed that the container according to the invention fully achieves the intended aim and objects, since it allows to provide a litter container which internally contains all the accessories that can be used to prepare and subsequently keep clean a litter for a cat or similar animal.

Moreover, the container according to the invention is compact and can be easily carried in addition to being directly placed, for example, in cages of animal breeding centers.

The container thus conceived is susceptible of numerous modifications and variations, all of which are within the scope of the inventive concept.

Thus, for example, as mentioned, the tray 3 can move with respect to the base element 2 instead of rotating about the pivot 14, so as to in any case free at least one portion of the compartment 10b.

All the details may furthermore be replaced with other technically equivalent elements.

In practice, the materials used, so long as they are compatible with the specific use, as well as the dimensions, may be any according to requirements and to the state of the art.

The disclosures in Italian Patent Application No. PI99A000042 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A multipurpose litter container for the urination and defecation of animals, particularly cats and the like, characterized in that it comprises a base element in which at least two compartments are formed; and
a litter containment element, which is adapted to be placed above said base element;
said litter containment element being detachably associable with said base element, so as to allow access to at least one portion of at least one of said compartments which is adapted to contain means for containing the used litter that is removed from said litter containment element.

2. The litter container according to claim 1, characterized in that said tray is pivoted at one of its corners with a corner of said base element for the rotation of said tray about said corner, in order to allow access to at least one portion of said at least one compartment of the base element.

3. The litter container according to claim 1, characterized in that said base element is provided with a partition which is adapted to form said two compartments.

4. The litter container according to one or more of the preceding claims, characterized in that said base element is provided with at least one cover which is adapted to close said compartment suitable to contain said means for containing the used litter.

5. The litter container according to claim 4, characterized in that said covering element can slide along a pair of guides formed on the inner surface of lateral walls of said base element.

6. The litter container according to claim 1, characterized in that said litter containment element is provided with at least one opening to allow to discharge said used litter into said means for containing the used litter which are accommodated in said base element.

7. The litter container according to one or more of the preceding claims, characterized in that said base element has, at said opening of said litter containment means, a protruding element which is adapted to engage in said opening.

8. The litter container according to claim 7, characterized in that said protruding element is externally provided with means for accommodating at least one scoop.

9. The litter container according to claim 1, characterized in that said means for containing said litter have a supporting foot to allow said containment means to rest on the ground when they are rotated with respect to said base element, in order to allow access to at least one portion of said compartment that contains said means for containing the used litter.

10. The litter container according to one or more of the preceding claims, characterized in that said base element and said means for containing said litter each comprise a box-like element.
